# EUROPEAN PATENT SPECIFICATION

(11) **EP 3 229 214 B1**
(45) Date of publication and mention of the grant of the patent: **03.04.2019**
(21) Application number: 17164756.3
(22) Date of filing: 04.04.2017
(51) Int. Cl.: G08B 13/196

(54) **SYSTEM AND METHOD FOR TRACKING UNAUTHORIZED INTRUDERS USING DRONES INTEGRATED WITH A SECURITY SYSTEM**
SYSTEME UND VERFAHREN ZUM VERFOLGEN VON NICHT BERECHTIGTEN EINDRINGLINGEN UNTER VERWENDUNG VON DROHNEN MIT INTEGRIERTEM SICHERHEITSSYSTEM
SYSTÈMES ET PROCÉDÉS PERMETTANT LE SUIVI DES INTRUS NON AUTORISÉS AU MOYEN DE DRONES FAISANT PARTIE INTÉGRANTE D'UN SYSTÈME DE SÉCURITÉ

(30) Priority: 05.04.2016 US 201662318407 P; 30.03.2017 US 201715474129
(43) Date of publication of application: 11.10.2017
(73) Proprietor: Honeywell International Inc., Morris Plains, NJ 07950 (US)
(72) Inventor: ASWATH, Ravikumar Vemagal, Morris Plains, NJ 07950 (US); PRASAD, Shankar, Morris Plains, NJ 07950 (US); KALKERE, Giridhara, Morris Plains, NJ 07950 (US)
(74) Representative: Houghton, Mark Phillip

(56) References cited:
- EP-A1- 3 118 826
- US-A1- 2008 144 884
- US-A1- 2015 339 912

## Description

### FIELD

The present invention relates generally to security systems and systems and methods for tracking unauthorized intruders. More particularly, the present invention relates to systems and methods for tracking unauthorized intruders using drones integrated with a security system.

### BACKGROUND

Security systems known in the art can monitor a region and send alarm signals to a central monitoring station or other device when the security system detects intrusion in the monitored region by an unauthorized intruder such as, for example, a burglar. When the central monitoring station or other device receives an alarm signal from a security system, the central monitoring station or other device can notify emergency personnel, such as police, who can arrive at the monitored region to investigate the alarm. However, there is an inherent time delay in such activity. Accordingly, by the time emergency personnel arrive at the monitored region, it is likely that the unauthorized intruder has left the monitored region, thereby making it difficult for apprehension.

It is known that many security systems include cameras or other image capturing devices installed at fixed locations throughout the monitored region. However, such installations have inherent location and range limitations in that the cameras cannot capture images of the entire monitored region, thereby making it difficult for the security system and any emergency personnel contacted by the security system or an associated central monitoring station to locate unauthorized intruders in the monitored region who are able to stay outside of the field of view of the installed cameras.

Patent document number US2008/144884A1 describes a system and method for an aerial surveillance system. Briefly described, one embodiment comprises a lighter-than-air aerial platform, at least one image capture device carried by the lighter-than-air aerial platform and operable to sequentially capture a plurality of images, and at least one control surface physically coupled to the lighter-than-air aerial platform and operable to control direction of movement of the lighter-than-air aerial platform along a surveillance path in response to a guidance control signal determined in part upon the sequentially captured plurality of images.

In view of the above, there is a continuing, ongoing need for improved systems and methods.

The present invention in its various aspects is as set out in the appended claims.

### BRIEF DESCRIPTION OF THE DRAWINGS

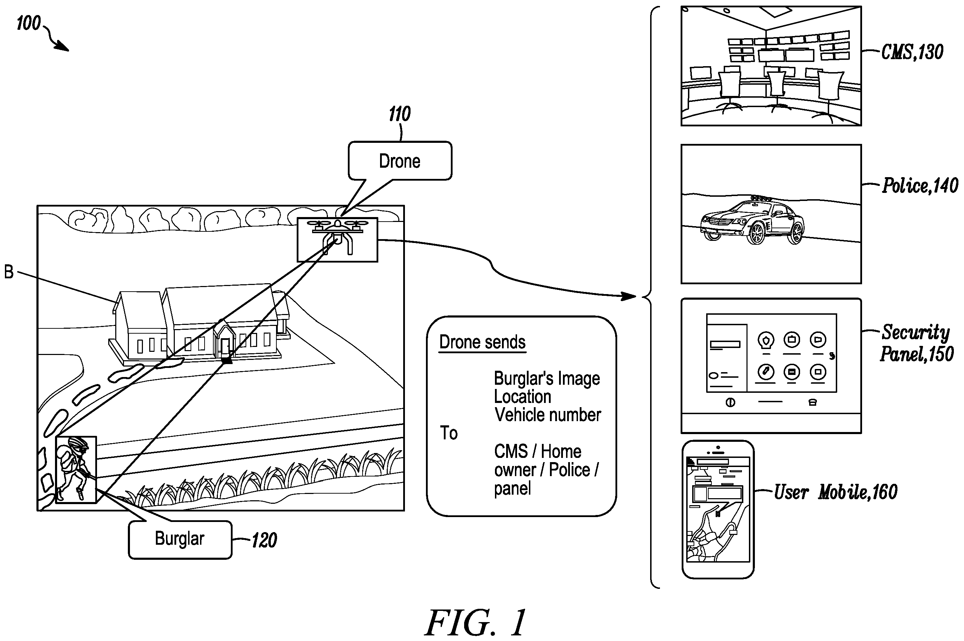

FIG. 1 is a schematic diagram of a system in accordance with disclosed embodiments.

### DETAILED DESCRIPTION

While this invention is susceptible of an embodiment in many different forms, specific embodiments thereof will be described herein in detail with the understanding that the present disclosure is to be considered as an exemplification of the principles of the invention. It is not intended to limit the invention to the specific illustrated embodiments.

Drones are known in the art and can include a camera or other image capturing device, WiFi or GSM capabilities, and a power source, such as a battery, that can power the drone for several hours or longer. Embodiments disclosed herein can include systems and methods for tracking unauthorized intruders using a drone integrated with a security system.

According to the present invention, a drone can be located in or near a monitored region and can receive an alarm signal from a control panel of a security system monitoring the region. The alarm signal can be indicative of the presence and location of an unauthorized intruder in the monitored region, and upon receipt of the alarm signal, the drone can activate and substantially immediately track the unauthorized intruder. Because the drone is located in or near the monitored region prior to receiving the alarm signal, the drone can quickly move to an initial location of the unauthorized intruder within the monitored region so that the drone or a camera or other image capturing device associated with the drone can capture images of the unauthorized intruder before the intruder leaves the monitored region or otherwise moves into a location that is difficult to identify.

According to the present invention, the alarm signal identifies the initial location of the unauthorized intruder, and the drone can use information in the alarm signal to identify the initial location of the unauthorized intruder. In any embodiment, because a drone is not a fixed device and can move virtually anywhere, once the drone locates the intruder and captures an initial image of the intruder, the drone can continuously track the intruder and capture continuous or periodic images of the intruder as the intruder moves from location to location, both within and outside of the monitored region. In some embodiments, the drone can transmit one or more signals indicative of the captured images, including an image of the intruder or the intruder's vehicle and a current location thereof, to one or more remote devices so that the remote devices receive substantially live and real-time images or video of the intruder. It is to be understood that the one or more remote devices that can receive a signal from the drone can include, but are not limited to a control panel or keypad of the security system, a central monitoring station associated with the security system, or a mobile device of an owner of the monitored region, emergency personnel, or another user as would be desired by those of ordinary skill in the art. Upon receipt of a signal from the drone, a user of the one or more remote devices can use the information in the signal to arrive at a location of the intruder for apprehension.

In some embodiments, a drone as disclosed herein can analyze the captured images to identify any weapons carried by the intruder and include an indication thereof in the one or more signals transmitted to the one or more remote devices. For example, in some embodiments, the one or more signals indicative of a weapon carried by the intruder can include a video message or a text message. Additionally or alternatively, in some embodiments, the one or more remote devices can analyze the captured images to identify any weapons carried by the intruder.

It is to be understood that a drone as disclosed herein or a camera or other image capturing device associated therewith can include control circuitry, one or more programmable processor, and executable control software as would be understood by one of ordinary skill in the art. The executable control software can be stored on a transitory or non-transitory computer readable medium, including, but not limited to local computer memory, RAM, optical storage media, magnetic storage media, flash memory, and the like. In some embodiments, the control circuitry, programmable processor, and control software can execute and control the methods described above and herein.

For example, in some embodiments, the control circuitry, programmable processor, and control software can execute methods of video analytics that can detect motion in captured images and video, that can track motion, and that can perform face or other object recognition, such as a vehicle, to locate and track an unauthorized intruder identified by an alarm signal received from a security system. Accordingly, the drone can capture and transmit signals indicative of, for example, substantially live and real-time images and video of an intruder, face recognition details of the intruder, vehicle identification numbers of a vehicle used by the intruder, and a current GPS location of the intruder.

In some embodiments, systems and methods disclosed herein can include a plurality of drones, and each of the plurality of drones can locate and track a respective unauthorized intruder. In these embodiments, each of the plurality of drones can communicate directly with each other for exchanging data to increase the efficiency and effectiveness of tracking the intruders.

In some embodiments, a drone as disclosed herein can include one or more intruder impeding mechanism that can be used to identify, trap, or stop an unauthorized intruder. For example, in some embodiments, when the drone arrives at the initial location of the unauthorized, the control circuitry, programmable processor, and control software can activate the one or more burglar impeding mechanism. When the burglar impeding mechanism includes a metal arm of the drone, activating the burglar impeding mechanism can cause the metal arm to attempt to remove a mask worn by the unauthorized intruder. When the burglar impeding mechanism includes a spray can carried by the drone, activating the burglar impeding mechanism can cause the spray can to spray a sticky gel on the floor in and around the initial location to prevent the unauthorized intruder from leaving the initial location. When the burglar impeding mechanism includes a high intensity flash light, activating the burglar impeding mechanism can include shining the flash light in the eyes of the unauthorized intruder to reduce visibility for the intruder, thereby making it difficult for the intruder to leave the initial location.

FIG. 1 is a schematic diagram of a system 100 in accordance with disclosed embodiments. As seen in FIG. 1, the system 100 can include a drone 110 in a monitored region R that includes a building B. The drone can be generally located in or near the building B or region R, and the drone 110 can include or carry a transceiver device and a camera or other image capturing device, each of which can be in communication with a programmable processor carried by the drone 110 and a non-transitory computer readable medium carried by the drone 110 storing executable control software that can be used to execute and control the methods described above and herein. It is to be understood that, while not discussed herein, the drone 110 can also include other elements and devices of drones known by those of skill in the art that can function to operate the drone as would be known by those of skill in the art.

Upon the transceiver device receiving an alarm signal from a control panel of a security system monitoring the building B, the programmable processor and the executable control software can instruct the drone 110 to move to an initial location of an unauthorized intruder 120 and instruct the camera to capture an initial image of the unauthorized intruder 120. According to the present invention, the alarm signal identifies the initial location of the unauthorized intruder 120, and the programmable processor and the executable control software can identify the initial location of the unauthorized intruder using information in the alarm signal. In some embodiments, the initial location of the unauthorized intruder 120 can be inside of the building B, and in some embodiments, the initial location of the unauthorized intruder 120 can be outside of the building B.

As the unauthorized intruder 120 moves inside and outside of the building B and inside and outside of the monitored region R, the drone 110 can track the unauthorized intruder 120, and the programmable processor and the executable control software can instruct the camera to capture continuous or periodic images of the unauthorized intruder 120. It is to be understood that the initial image of the unauthorized intruder 120 and the continuous or periodic images of the unauthorized intruder 120 captured by the camera can include an image of the person of the unauthorized intruder 120 and/or an image of a vehicle carrying the unauthorized intruder 120.

The programmable processor and the executable control software can instruct the transceiver device to transmit periodic or continuous signals indicative of the captured images and a respective location of the unauthorized intruder 120 when each of the images is captured to one or more of a central monitoring station 130 in communication with the security system monitoring the building B, emergency personnel 140, the control panel 150 of the security system monitoring the building B, and a mobile device 160 of the owner of the building B.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the scope of the invention, as defined in the claims. It is to be understood that no limitation with respect to the specific system or method described herein is intended or should be inferred. It is, of course, intended to cover all such modifications as fall within the scope of the invention, as defined in the claims.

## Claims

1. A method comprising:
a transceiver device carried by a first drone receiving an alarm signal from a control panel of a security system monitoring a region, wherein the alarm signal indicates a first unauthorized intruder is located in the region and includes data indicative of an initial location of the first unauthorized intruder;
responsive to the transceiver device receiving the alarm signal, a programmable processor carried by the first drone and executable control software stored on a non-transitory computer medium carried by the first drone instructing the first drone to move to the initial location of the first unauthorized intruder;
an image capturing device carried by the first drone capturing an initial image of the first unauthorized intruder at the initial location; and
the programmable processor and the executable control software tracking the first unauthorized intruder.

2. The method of claim 1 wherein the first drone is located in the region prior to receiving the alarm signal.

3. The method of claim 1 further comprising the transceiver device transmitting an image signal to a remote device, wherein the image signal includes the initial image of the first unauthorized intruder or a current location of the first unauthorized intruder when the initial image is captured.

4. The method of claim 3 further comprising:
the programmable processor and the executable control software analyzing the initial image to identify a weapon carried by the first unauthorized intruder; and
the transceiver device transmitting an identification of the weapon in the image signal transmitted to the remote device.

5. The method of claim 1 further comprising the image capturing device capturing periodic or continuous images of the first unauthorized intruder while the programmable processor and the executable control software track the first unauthorized intruder.

6. The method of claim 5 further comprising the transceiver device transmitting a plurality of image signals to a remote device, wherein each of the plurality of image signals includes a respective one of the periodic or continuous images of the first unauthorized intruder or a current location of the first unauthorized intruder when the respective one of the periodic or continuous images is captured.

7. The method of claim 5 further comprising the programmable processor and the executable control software detecting and tracking motion in the periodic or continuous images.

8. The method of claim 5 further comprising the programmable processor and the executable control software performing face or object recognition on the periodic or continuous images to locate and track the first unauthorized intruder or a vehicle carrying the first unauthorized intruder.

9. The method of claim 1 further comprising the programmable processor and the executable control software activating an intruder impeding mechanism carried by the first drone upon arrival at the initial location.

10. The method of claim 1 further comprising the transceiver device exchanging communication signals with a second drone capturing a second unauthorized intruder.

11. A system comprising:
a first drone;
a transceiver device carried by the first drone;
an image capturing device carried by the first drone;
a programmable processor carried by the first drone; and
executable control software stored on a non-transitory computer readable medium carried by the first drone,
wherein the transceiver device receives an alarm signal from a control panel of a security system monitoring a region,
wherein the alarm signal indicates a first unauthorized intruder is located in the region and includes data indicative of an initial location of the first unauthorized intruder,
wherein, responsive to the transceiver device receiving the alarm signal, the programmable processor and the executable control software instruct the first drone to move to the initial location of the first unauthorized intruder,
wherein the image capturing device captures an initial image of the first unauthorized intruder at the initial location, and
wherein the programmable processor and the executable control software track the first unauthorized intruder.

12. The system of claim 11 wherein the first drone is located in the region prior to receiving the alarm signal.

## Patentansprüche

1. Verfahren, umfassend, dass:
eine Sendeempfängervorrichtung, die von einer ersten Drohne getragen wird, ein Alarmsignal von einem Bedienfeld eines Sicherheitssystems empfängt, das eine Region überwacht, wobei das Alarmsignal anzeigt, dass sich ein erster unberechtigter Eindringling in der Region befindet, und Daten umfasst, die eine Ausgangsposition des ersten unberechtigten Eindringlings anzeigen;
ein programmierbarer Prozessor, der von der ersten Drohne getragen wird, und ausführbare Steuerungssoftware, die auf einem nicht-transitorischen Computermedium gespeichert ist, das von der ersten Drohne getragen wird, die erste Drohne in Reaktion auf den Empfang des Alarmsignals durch die Sendeempfängervorrichtung anweisen, sich zur Ausgangsposition des ersten unberechtigten Eindringlings zu bewegen;
eine Bilderfassungsvorrichtung, die von der ersten Drohne getragen wird, ein Ausgangsbild des ersten unberechtigten Eindringlings in der Ausgangsposition erfasst; und
der programmierbare Prozessor und die ausführbare Steuerungssoftware den ersten unberechtigten Eindringling verfolgen.

2. Verfahren nach Anspruch 1, wobei die erste Drohne vor dem Empfangen des Alarmsignals in der Region angeordnet wird.

3. Verfahren nach Anspruch 1, ferner umfassend, dass die Sendeempfängervorrichtung ein Bildsignal an eine entfernte Vorrichtung sendet, wobei das Bildsignal das Ausgangsbild des ersten unberechtigten Eindringlings oder eine aktuelle Position des ersten unberechtigten Eindringlings umfasst, wenn das Ausgangsbild erfasst wird.

4. Verfahren nach Anspruch 3, ferner umfassend, dass:
der programmierbare Prozessor und die ausführbare Steuerungssoftware das Ausgangsbild analysieren, um eine Waffe zu identifizieren, die vom ersten unberechtigten Eindringling getragen wird; und
die Sendeempfängervorrichtung eine Identifizierung der Waffe im Bildsignal sendet, das an die entfernte Nachricht gesendet wird.

5. Verfahren nach Anspruch 1, ferner umfassend, dass die Bilderfassungsvorrichtung periodische oder kontinuierliche Bilder des ersten unberechtigten Eindringlings erfasst, während der programmierbare Prozessor und die ausführbare Steuerungssoftware den ersten unberechtigten Eindringling verfolgen.

6. Verfahren nach Anspruch 5, ferner umfassend, dass die Sendeempfängervorrichtung eine Mehrzahl von Bildsignalen an eine entfernte Vorrichtung sendet, wobei jedes der Mehrzahl von Bildsignalen ein jeweiliges der periodischen oder kontinuierlichen Bilder des ersten unberechtigten Eindringlings oder eine aktuelle Position des ersten unberechtigten Eindringlings umfasst, wenn das jeweilige der periodischen oder kontinuierlichen Bilder erfasst wird.

7. Verfahren nach Anspruch 5, ferner umfassend, dass der programmierbare Prozessor und die ausführbare Steuerungssoftware Bewegung in den periodischen oder kontinuierlichen Bildern erkennen und verfolgen.

8. Verfahren nach Anspruch 5, ferner umfassend, dass der programmierbare Prozessor und die ausführbare Steuerungssoftware Gesichts- oder Objekterkennung an den periodischen oder kontinuierlichen Bildern durchführen, um den ersten unberechtigten Eindringling oder ein den ersten unberechtigten Eindringling beförderndes Fahrzeug zu lokalisieren und zu verfolgen.

9. Verfahren nach Anspruch 1, ferner umfassend, dass der programmierbare Prozessor und die ausführbare Steuerungssoftware einen von der ersten Drohne getragenen Eindringlingsabwehrmechanismus bei Ankunft in der Ausgangsposition aktivieren.

10. Verfahren nach Anspruch 1, ferner umfassend, dass die Sendeempfängervorrichtung Kommunikationssignale mit einer zweiten Drohne austauscht, die einen zweiten unberechtigten Eindringling erfasst.

11. System, umfassend:
eine erste Drohne;
eine Sendeempfängervorrichtung, die von der ersten Drohne getragen wird;
eine Bilderfassungsvorrichtung, die von der ersten Drohne getragen wird;
einen programmierbaren Prozessor, die von der ersten Drohne getragen wird; und
ausführbare Steuerungssoftware, die auf einem nicht-transitorischen computerlesbaren Medium gespeichert ist, das von der ersten Drohne getragen wird,
wobei die Sendeempfängervorrichtung ein Alarmsignal von einem Bedienfeld eines Sicherheitssystems empfängt, das eine Region überwacht,
wobei das Alarmsignal anzeigt, dass sich ein erster unberechtigter Eindringling in der Region befindet, und Daten umfasst, die eine Ausgangsposition des ersten unberechtigten Eindringlings anzeigen,
wobei der programmierbare Prozessor und die ausführbare Steuerungssoftware die erste Drohne in Reaktion auf den Empfang des Alarmsignals durch die Sendeempfängervorrichtung anweisen, sich zur Ausgangsposition des ersten unberechtigten Eindringlings zu bewegen,
wobei die Bilderfassungsvorrichtung ein Ausgangsbild des ersten unberechtigten Eindringlings in der Ausgangsposition erfasst, und
wobei der programmierbare Prozessor und die ausführbare Steuerungssoftware den ersten unberechtigten Eindringling verfolgen.

12. System nach Anspruch 11, wobei die erste Drohne vor dem Empfangen des Alarmsignals in der Region angeordnet wird.

## Revendications

1. Procédé, comprenant :
la réception, par un dispositif émetteur-récepteur transporté par un premier drone, d'un signal d'alarme depuis un panneau de commande d'un système de sécurité surveillant une région, le signal d'alarme indiquant qu'un premier intrus non autorisé se trouve dans la région et comportant des données indiquant une localisation initiale du premier intrus non autorisé ;
en réponse à la réception, par le dispositif émetteur-récepteur, du signal d'alarme, l'instruction donnée, par un processeur programmable transporté par le premier drone et un logiciel de commande exécutable stocké sur un support non transitoire d'ordinateur transporté par le premier drone, au premier drone de se déplacer vers la localisation initiale du premier intrus non autorisé ;
la capture, par un dispositif de capture d'image transporté par le premier drone, d'une image initiale du premier intrus non autorisé à la localisation initiale ; et
le suivi à la trace, par le processeur programmable et le logiciel de commande exécutable, du premier intrus non autorisé.

2. Procédé selon la revendication 1, dans lequel le premier drone se trouve dans la région avant de recevoir le signal d'alarme.

3. Procédé selon la revendication 1, comprenant en outre la transmission, par le dispositif émetteur-récepteur, d'un signal d'image à un dispositif distant, le signal d'image comportant l'image initiale du premier intrus non autorisé ou une localisation initiale du premier intrus non autorisé au moment de la capture de l'image initiale.

4. Procédé selon la revendication 3, comprenant en outre :
l'analyse, par le processeur programmable et le logiciel de commande exécutable, de l'image initiale aux fins d'identifier une arme portée par le premier intrus non autorisé ; et
la transmission, par le dispositif émetteur-récepteur, d'une identification de l'arme dans le signal d'image transmis au dispositif distant.

5. Procédé selon la revendication 1, comprenant en outre la capture, par le dispositif de capture d'image, d'images périodiques ou continues du premier intrus non autorisé simultanément au suivi à la trace, par le processeur programmable et le logiciel de commande exécutable, du premier intrus non autorisé.

6. Procédé selon la revendication 5, comprenant en outre la transmission, par le dispositif émetteur-récepteur, d'une pluralité de signaux d'image à un dispositif distant, chacun de la pluralité de signaux d'image comportant une image respective des images périodiques ou continues du premier intrus non autorisé ou une localisation actuelle du premier intrus non autorisé au moment de la capture de l'image respective des images périodiques ou continues.

7. Procédé selon la revendication 5, comprenant en outre la détection et le suivi à la trace, par le processeur programmable et le logiciel de commande exécutable, d'un mouvement dans les images périodiques ou continues.

8. Procédé selon la revendication 5, comprenant en outre la réalisation, par le processeur programmable et le logiciel de commande exécutable, d'une reconnaissance faciale ou d'objet sur les images périodiques ou continues aux fins de localiser et de suivre à la trace le premier intrus non autorisé ou un véhicule transportant le premier intrus non autorisé.

9. Procédé selon la revendication 1, comprenant en outre l'activation, par le processeur programmable et le logiciel de commande exécutable, d'un mécanisme entravant l'intrus transporté par le premier drone lorsque celui-ci parvient à la localisation initiale.

10. Procédé selon la revendication 1, comprenant en outre l'échange, par le dispositif émetteur-récepteur, de signaux de communication avec un deuxième drone capturant un deuxième intrus non autorisé.

11. Système, comprenant :
un premier drone ;
un dispositif émetteur-récepteur transporté par le premier drone ;
un dispositif de capture d'image transporté par le premier drone ;
un processeur programmable transporté par le premier drone ; et
un logiciel de commande exécutable stocké sur un support non transitoire lisible par ordinateur transporté par le premier drone,
le dispositif émetteur-récepteur recevant un signal d'alarme depuis un panneau de commande d'un système de sécurité surveillant une région,
le signal d'alarme indiquant qu'un premier intrus non autorisé se trouve dans la région et comportant des données indiquant une localisation initiale du premier intrus non autorisé,
en réponse à la réception, par le dispositif émetteur-récepteur, du signal d'alarme, le processeur programmable et le logiciel de commande exécutable donnant pour instruction au premier drone de se déplacer vers la localisation initiale du premier intrus non autorisé,
le dispositif de capture d'image capturant une image initiale du premier intrus non autorisé à la localisation initiale, et
le processeur programmable et le logiciel de commande exécutable suivant à la trace le premier intrus non autorisé.

12. Système selon la revendication 11, dans lequel le premier drone se trouve dans la région avant de recevoir le signal d'alarme.
